# FASCICULE DE BREVET EUROPEEN

(11) **EP 3 320 593 B1**
(45) Date de publication et mention de la délivrance du brevet: **21.10.2020**
(21) Numéro de dépôt: 16741560.3
(22) Date de dépôt: 07.07.2016
(51) Int. Cl.: H02J 3/18, H02J 3/32, H02M 7/797, H02M 1/12, H02M 3/158, H02M 7/48

(54) **SYSTEME DE GENERATION D'ENERGIE A TRAITEMENT AMELIORE DES IMPACTS DE CHARGE, DES DELESTAGES ET DES HARMONIQUES**
SYSTEM ZUR ENERGIEERZEUGUNG MIT VERBESSERTER BEHANDLUNG VON LASTSTÖSSEN, LASTABWÜRFEN UND OBERSCHWINGUNGEN
POWER-GENERATING SYSTEM WITH IMPROVED TREATMENT OF CHARGING IMPACTS, LOAD SHEDDING AND HARMONICS

(30) Priorité: 09.07.2015 FR 1556497
(43) Date de publication de la demande: 16.05.2018
(73) Titulaire: Moteurs Leroy-Somer, 16915 Angouleme Cedex 9 (FR); Universite De Poitiers, 86073 Poitiers (FR)
(72) Inventeur: MOUNI, Emile, 16000 Angoulême (FR); MANFE, Philippe, 16730 Linars (FR); BENSMAINE, Fayçal, 13090 Aix en Provence (FR); TNANI, Slim, 86800 Sèvres-Anaumont (FR); CHAMPENOIS, Gérard, 86280 Saint-Benoit (FR)
(74) Mandataire: Nony
(86) Numéro de dépôt international: PCT/EP2016/066133
(87) Numéro de publication internationale: WO 2017/005856

(56) Documents cités:
- WO-A1-2014/147294
- US-A1- 2013 128 636
- SINGH J ET AL: "Improved performance of diesel driven permanent magnet synchronous generator using Battery Energy Storage System", ELECTRICAL POWER&ENERGY CONFERENCE (EPEC), 2009 IEEE, IEEE, PISCATAWAY, NJ, USA, 22 octobre 2009 (2009-10-22), pages 1-6, XP031642150, ISBN: 978-1-4244-4508-0
- EID A ET AL: "Active power filters for harmonic cancellation in conventional and advanced aircraft electric power systems", ELECTRIC POWER SYSTEMS RESEARCH, ELSEVIER, AMSTERDAM, NL, vol. 79, no. 1, 1 janvier 2009 (2009-01-01), pages 80-88, XP025572105, ISSN: 0378-7796, DOI: 10.1016/J.EPSR.2008.05.005 [extrait le 2008-07-07]
- BOHORQUEZ V B ED - GODOY R B ET AL: "A control algorithm for hybrid compensation of Fast Varying Loads", ELECTRICAL POWER QUALITY AND UTILISATION, 2007. EPQU 2007. 9TH INTERNATIONAL CONFERENCE ON, IEEE, PISCATAWAY, NJ, USA, 9 octobre 2007 (2007-10-09), pages 1-6, XP031225906, ISBN: 978-84-690-9441-9

## Description

L'invention concerne la production d'énergie électrique utilisant un alternateur mécaniquement accouplé à un moteur d'entrainement.

L'alternateur est classiquement équipé d'un régulateur de tension et le moteur d'entraînement est contrôlé en fonction de la puissance demandée.

Des impacts de charge ainsi que des délestages peuvent se produire et les composants de puissance de l'alternateur sont dimensionnés en conséquence.

Il peut en résulter un surdimensionnement de ces composants par rapport au régime nominal de fonctionnement, ce qui se répercute sur le prix de l'installation.

Il existe ainsi un besoin pour réduire la taille des composants de puissance de l'installation de génération d'énergie électrique.

Il est également souhaitable d'améliorer le comportement de l'installation en cas de régime transitoire, notamment lors des délestages et/ou des impacts de charge.

La publication *«Active power filters for harmonic cancellation in conventional and advanced aircraft eletric power systems* ») divulgue un système de filtrage actif classique appliqué aux réseaux de bord des avions qui a pour but la compensation des harmoniques. Cette publication ne divulgue ni ne suggère le contrôle du système pour réagir aux régimes transitoires de puissance active et/ou réactive en cas de délestage ou d'impact de charge.

Il existe encore un intérêt pour réduire l'intensité des courants harmoniques produits par l'installation afin de satisfaire aux normes les plus sévères, notamment en cas d'injection du courant produit sur le réseau (voir par exemple: Singh et al, "Improved performance of diesel driven permanent magnet synchronous generator using battery energy storage system, Electrical Power & Energy Conférence (EPEC), 2009 IEEE, Istacaway, NJ, USA, 22 octobre 2009, pages 1-6; et: Eid A et al : Active power filter for harmonie cancellation in conventional and advanced aircraft electric power systems", Electric Power Sytems Research, Elsevier, Amsterdam, NL, vol. 79, no. 1, 1 janvier 2009, pages 80-88, ISSN: 0378-7796, DOI: 10.1016/J.EPSR.2008.05.005).

L'invention tente de répondre à tout ou partie de ces besoins et elle y parvient grâce à un système de génération électrique selon la revendication 1. Des modes particuliers de réalisation étant définis dans les revendications dépendantes.

Ainsi l'invention permet d'améliorer la réponse du système en régime transitoire.

Le convertisseur est avantageusement commandé pour injecter des courants de compensation des courants harmoniques sur le bus de sortie AC de l'alternateur.

De préférence, le contrôleur permet le contrôle du couple moteur à partir de l'élément de stockage lors des impacts et délestages de charge.

Le contrôleur est de préférence agencé pour réagir à un régime transitoire de puissance active et/ou réactive sur micro réseau tel que défini ci-après, lors du délestage ou d'impact de charge, en contrôlant le(s) déséquilibre(s) en forme pouvant atteindre jusqu'à 30% de taux de distorsion harmonique en amplitude quel que soit le niveau de la charge et en temps de réponse grâce à la commande du convertisseur gérant l'énergie sur le bus de sortie de l'alternateur. Par « micro réseau », il faut comprendre un alternateur en fonctionnement iloté ou en parallèle d'autres alternateurs sous la condition que la puissance totale du réseau global reste inférieure à 5 fois la puissance du dit-alternateur.

De préférence, l'élément de stockage n'est sollicité qu'en régime transitoire de puissance active et/ou réactive.

De préférence, l'alternateur est triphasé.

Dans le système selon l'invention, la tension de sortie de l'alternateur sert non seulement à alimenter la ou les charges qui lui sont connectées mais aussi à charger l'élément de stockage via le convertisseur réversible.

Cet élément de stockage est de préférence composé d'un super-condensateur mais tout autre moyen de stockage entre dans le cadre de l'invention, tel qu'un condensateur classique ou une batterie.

Le convertisseur réversible permet la transformation de la tension alternative en tension continue lors de la charge du super-condensateur ou autre élément de stockage, en assurant une fonction de redresseur en fonctionnement normal ou lors d'un délestage de charge. L'invention permet d'éviter une surtension sur le bus de sortie lors d'un délestage, ou à tout le moins de réduire l'amplitude de celle-ci.

Lors d'un impact de charge, le convertisseur assure une fonction d'onduleur et limite le creux de tension en injectant sur le bus de tension alternative de l'énergie prélevée sur le super-condensateur ou autre élément de stockage.

Le convertisseur électronique peut utiliser des interrupteurs électroniques tels que des IGBT, mais toute autre composant électronique commandé entre dans le cadre de l'invention.

Le super-condensateur peut être formé par un unique composant ou par un ensemble de composants reliés électriquement en série et/ou en parallèle, de façon à atteindre la tension d'isolation et/ou la capacité recherchée.

La demande US 2009/0195074 A1 divulgue une solution à base de système de stockage dans l'application de forage. Dans cette demande, une stratégie de gestion permet de gérer la puissance demandée par le système de forage en prélevant l'énergie nécessaire du système de stockage.

Le système comporte de préférence un filtre passif, ce filtre passif comportant une inductance connectée entre chaque phase du bus de sortie de l'alternateur et une phase correspondante de l'entrée/sortie AC du convertisseur. Ce filtre passif est destiné à supprimer les hautes fréquences.

Le convertisseur peut être de type « triple boost », c'est-à-dire comporter trois bras comportant chacun une inductance Lf reliée par une première borne à une première borne de l'élément de stockage, un premier interrupteur électronique relié à une deuxième borne de l'inductance Lf et à une phase correspondante de l'entrée/sortie AC du convertisseur, un deuxième interrupteur électronique relié à la deuxième borne de l'inductance Lf et à une deuxième borne de l'élément de stockage, et un condensateur d'équilibrage C_{f} disposé entre la phase correspondante de l'entrée/sortie AC du convertisseur et la deuxième borne de l'élément de stockage.

Cette structure peut permettre de réduire le niveau de tension continue aux bornes de l'élément de stockage, et le coût de celui-ci.

Des exemples de convertisseurs « triple boost » sont par exemple divulgués dans les brevets US7596008B2 et US8737098B2.

En variante, le convertisseur peut être du type multiniveau, par exemple à p niveaux, p étant un entier supérieur à 2. Le convertisseur peut ainsi comporter trois bras comportant chacun un premier groupe de p interrupteurs électriquement connectés en série entre une borne de l'élément de stockage et une phase du bus AC du convertisseur, et un deuxième groupe de p interrupteurs électriques connectés en série entre la même phase du bus AC du convertisseur et l'autre borne de l'élément de stockage.

Chaque bras peut comporter p-1 condensateurs d'équilibrage, chaque condensateur d'équilibrage étant connecté par une borne entre les n^{ième} et n+1^{ième} interrupteurs électroniques du premier groupe, comptés depuis la phase respective du bus AC et par l'autre borne entre les n^{ième} et n+1^{ième} interrupteurs électroniques du deuxième groupe, comptés depuis la même phase du bus AC.

Des convertisseurs multiniveaux avec des capacités flottantes sont décrits dans les publications US8144491B2 et US20130128636A1. Les condensateurs d'équilibrage peuvent être des condensateurs classiques, des super-condensateurs ou des batteries.

Par rapport à la structure de convertisseur « triple boost », la structure multiniveau permet de réduire les fluctuations de la tension de sortie de l'onduleur et permet au système d'utiliser un filtrage passif ayant des inductances de plus faible valeur, ce qui réduit le volume, la masse et le coût du filtre passif.

Le convertisseur est piloté de façon à réagir aux impacts de charge et aux délestages grâce à un contrôleur qui lui adresse des signaux de commande respectifs Sₐ, S_{b}, S_{c} pour chacune des phases, et qui analyse les courants et la tension sur le bus AC du convertisseur.

Les signaux de commande Sₐ, S_{b}, S_{c} du convertisseur sont par exemple générés lors de la mise en œuvre d'un procédé de pilotage du convertisseur comportant les étapes suivantes:
- calcul de composantes active et réactive i_{d}, i_{q} du courant triphasé iₐ, i_{b}, i_{c} du bus AC du convertisseur, de préférence dans un repère de Park tournant de même fréquence,
- calcul de courants actif et réactif de référence i_{d}*, i_{q}* dans le même repère de Park,
- calcul de tensions de référence β_{q}, β_{d}, à partir des différences i_{d}", i_{q}" entre les courants actif et réactif de référence i_{d}*, i_{q}* et les composantes active et réactive i_{d}, i_{q} du courant iₐ, i_{b}, i_{c} du bus AC du convertisseur, et
- calcul de tensions de commande des transferts de puissance mₐ, m_{b}, m_{c} du convertisseur à partir des tensions de référence β_{q}, β_{d}, de préférence par transformation inverse de Park dans le repère triphasé du courant du bus AC du convertisseur iₐ, i_{b}, i_{c}.

Les courants actif et réactif de référence i_{d}*, i_{q}* peuvent être obtenus à partir des composantes active et réactive i_{ld}, i_{lq} du courant de sortie du système iₗₐ, i_{lb}, i_{lc}, de préférence dans le même repère de Park.

De préférence, l'élément de stockage n'est sollicité en décharge qu'en régime transitoire.

Pour ce faire, la composante active i_{ld} du courant de sortie du système iₗₐ, i_{lb}, i_{lc} est avantageusement filtrée par un filtre pour y éliminer les hautes fréquences et la composante continue afin d'éviter que le convertisseur échange de l'énergie en régime permanent.

De préférence, chacune des composantes active et réactive i_{ld}, i_{lq} du courant de sortie du système iₗₐ, i_{lb}, i_{lc} est filtrée par un filtre, dont la fréquence de coupure peut être 100 fois plus faible que la fréquence de commutation des interrupteurs.

Dans une variante, la composante réactive i_{lq} des courants de sortie du système iₗₐ, i_{lb}, i_{lc} est filtrée de manière à obtenir un courant réactif i_{qp} dans l'alternateur nul.

Ainsi, l'invention permet de compenser la puissance réactive, avec le convertisseur, et ainsi d'obtenir un coscp unitaire vu de l'alternateur.

La demande WO2014/147297 A1 divulgue une alimentation sans coupure avec un élément de stockage qui peut fournir la puissance active à la charge par manque d'une ou plusieurs phase de la source (tout ou rien). Lorsque la source est normale, l'onduleur est utilisé en filtrage actif de courant et en rééquilibrage des courants de phase ; cependant cette solution ne gère pas le régime transitoire entre la puissance de la source et celle de la charge.

Des grandeurs autres que les courants de sortie du système iₗₐ, i_{lb}, i_{lc} peuvent être utilisées pour le calcul des courants actif et réactif de référence i_{d}*, i_{q}*. Cela peut permettre de réduire le nombre de capteurs, notamment de courant. Par exemple, les courants actif et réactif de référence i_{d}*, i_{q}* peuvent être calculés respectivement en fonction au moins de la vitesse Ω du système d'entraînement et du courant d'excitation i_{f} d'une excitatrice de l'alternateur. Ce calcul est par exemple illustré dans « Machines synchrones - excitation. Techniques de l'ingénieur, D3545, 1997 » par P. Wetzer.

Par ailleurs, le convertisseur est commandé pour injecter des courants de compensation des courants harmoniques sur le bus de sortie AC de l'alternateur. De préférence, le convertisseur comporte au moins une fonction filtre actif pour générer des tensions de commande de ces interrupteurs électroniques induisant une compensation des courants harmoniques. Ces tensions de commande peuvent être rajoutées aux tensions de commande des transferts de puissance pour l'obtention des signaux de commande Sₐ, S_{b}, S_{c} du convertisseur.

Cela permet d'annuler les courants harmoniques dans l'alternateur avec le convertisseur statique en réalisant le filtrage actif des harmoniques de courants issus d'une charge non-linéaire.

L'invention permet aussi d'annuler les courants harmoniques dans le convertisseur statique en réalisant un circuit « bouchon » pour les harmoniques de tension issus de l'alternateur et/ou de la charge non-linéaire.

Les tensions de commande de compensation des courants harmoniques peuvent être obtenues au moins par calcul des composantes active et réactive i_{dn}, i_{qn} des courants de sortie de l'alternateur iₚₐ, i_{pb}, i_{pc}, de préférence dans un repère de Park tournant, de fréquence n fois supérieure à la fréquence du repère triphasé, n étant un entier supérieur à 2. Cela permet de réduire, et mieux d'annuler, les courants harmoniques dans l'alternateur.

Ce principe de filtrage actif peut être appliqué à tous les courants harmoniques que l'on souhaite compenser. Il suffit de multiplier cette structure de compensation et d'ajouter toutes les tensions de commande dans le repère triphasé. Toute combinaison quelconque de filtrage harmonique composée d'au moins un filtre actif entre ainsi dans le cadre de l'invention.

Par exemple, les tensions de commande de compensation des courants harmoniques peuvent aussi être calculées à partir des composantes active et réactive du courant iₐ, i_{b}, i_{c} du bus AC du convertisseur dans un repère de Park tournant, de fréquence n fois supérieure à la fréquence du repère triphasé, n étant un entier supérieur à 2. Cela permet d'éviter que les tensions harmoniques du réseau triphasé créées par l'alternateur ne produisent des courants harmoniques dans le convertisseur.

La valeur du courant de référence actif i_{d}* peut être retranchée d'un courant de contrôle de l'élément de stockage Id_{VDC} avant d'être utilisée pour le calcul des tensions de référence β_{q}, β_{d} afin d'éviter un dépassement d'un seuil de tension de sécurité prédéfini, ce courant de contrôle ID_{VDC} étant fonction au moins de la tension V_{DC} aux bornes de l'élément de stockage et du courant nominal direct Idₙ de l'alternateur.

L'invention pourra être mieux comprise à la lecture de la description détaillée qui va suivre, d'exemples non limitatifs de mise en œuvre de celle-ci, et à l'examen du dessin annexé, sur lequel:
- la figure 1 est une représentation schématique d'un système selon l'invention, dans le cas d'une génératrice triphasée,
- la figure 2 représente une structure de convertisseur du type triple boost,
- la figure 3 représente une structure de convertisseur multiniveau à (p+1) niveaux pour p cellules,
- la figure 4 est un exemple de schéma de commande permettant une gestion de l'élément de stockage pendant les phases transitoires,
- la figure 5 est une vue analogue à la figure 4, d'une variante de schéma de commande avec une référence libre pour la puissance réactive permettant à l'utilisateur de choisir un niveau quelconque de puissance réactive à compenser,
- la figure 6 présente une variante de schéma de commande à partir d'un modèle fondé sur la vitesse de rotation du groupe et le courant d'excitation de l'alternateur,
- la figure 7 présente une structure de commande des courants harmoniques en vue de réaliser un filtrage actif,
- la figure 8 illustre un procédé de gestion de la tension aux bornes du super-condensateur,
- la figure 9a illustre un exemple de procédé de charge du super-condensateur avec une fonction de sécurité, et
- la figure 9b illustre un exemple de seuils de déclenchement de la charge et de la mise en sécurité du système en fonction de la tension aux bornes de l'élément de stockage *V_{DC}.*

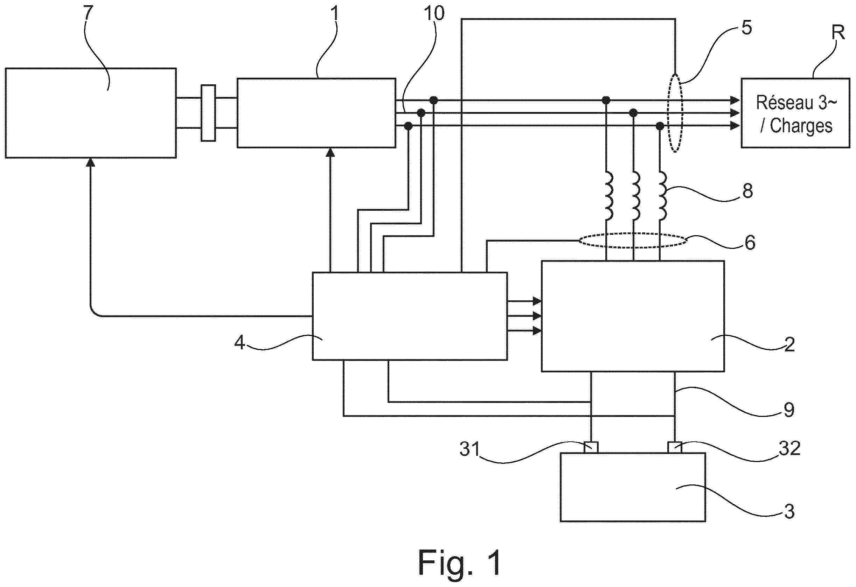

On a représenté sur la figure 1 un exemple d'installation selon l'invention, de production d'énergie délivrée à un bus de sortie 10 relié au réseau triphasé ou à une ou plusieurs charges R.

L'installation comporte un moyen d'entraînement 7 tel qu'un moteur thermique par exemple, ou tout autre moyen d'entraînement, éolien ou hydrique. Le moyen d'entraînement 7 entraîne en rotation le rotor d'un alternateur 1, encore appelé génératrice, comportant une excitatrice alimentant un inducteur principal disposé au rotor, l'induit principal statorique étant relié au bus de sortie 10.

L'alternateur 1 est entraîné en rotation à une vitesse régulée, mais le bus de sortie 10 peut être soumis à des impacts de charge ou à des délestages.

L'installation comporte un convertisseur réversible AC/DC 2 piloté par un contrôleur 4, et un élément de stockage 3.

Le contrôleur 4 peut connaître, grâce à des capteurs de courant dans l'exemple de la figure 1, le courant dans chacune des phases 5 de la charge R et le courant de chacune phase du bus AC 6 du convertisseur 2, ainsi que la tension de chacune des phases du bus de sortie 10 de l'alternateur 1.

Dans l'exemple illustré de la figure 1, chaque phase du bus AC du convertisseur 2 comporte une inductance 8, en série entre le convertisseur 2 et la phase correspondante du bus de sortie de l'alternateur 1. Le dimensionnement de ces inductances 8 dépend de la puissance de l'installation.

En fonctionnement normal, le contrôleur 4 assure la régulation de tension de l'alternateur 1 grâce à la détection de la tension du bus de sortie 10 de l'alternateur 1.

Dans le cas d'une excitatrice conventionnelle bobinée, le contrôleur 4 peut être muni d'un élément de puissance lui permettant de fournir à l'inducteur d'excitatrice le courant d'excitation requis pour assurer la régulation recherchée de la tension de sortie de l'alternateur 1.

Pour assurer la charge/décharge de l'élément de stockage 3, le contrôleur envoie des ordres de commande au convertisseur électronique réversible 2. Pour ce faire, une supervision continue de la tension de charge/décharge V_{DC}, des courants de charge/décharge de l'élément de stockage 3, ainsi que de l'état transitoire (impact, délestage) du système est réalisée.

Lors d'un délestage de charge, un ordre de charge de l'élément de stockage 3 est donné pour permettre de réduire au mieux le dépassement de tension de l'alternateur. On procède à une recharge de l'élément de stockage 3 également lorsque le niveau de l'élément de stockage 3 est inférieur à certains seuils prédéfinis.

L'ordre de décharge quant à lui est donné lors des impacts de charge, pour limiter la chute de tension aux bornes de l'alternateur 1, ou lorsque le niveau de l'élément de stockage 3 est supérieur à un seuil prédéfini.

Les ordres de commande peuvent être envoyés par voie filaire ou sans fil sans sortir du cadre de la présente invention.

Le contrôleur 4 assure également, dans l'exemple illustré, la communication avec le moteur d'entrainement 7, permettant avantageusement une anticipation de la variation de vitesse éventuelle due à un impact ou un délestage de charge. En effet, grâce à la mesure du courant de sortie du système iₗₐ, i_{lb}, i_{lc} et de celui échangé avec l'élément de stockage 3, le contrôleur 4 peut estimer la puissance en jeu et déterminer une consigne permettant d'anticiper l'admission de carburant du moteur afin de limiter les perturbations sur le bus de sortie de l'alternateur lors d'un régime transitoire.

Le contrôleur 4 supervise ainsi avantageusement :
- la commande des échanges de puissances active et réactive d'une part entre le réseau triphasé créé par l'alternateur 1 et d'autre part la ou les charges R, à l'aide du convertisseur 2 triphasé connecté à l'élément de stockage 3 à courant continu,
- la gestion des courants harmoniques apportés par la force électromotrice de la machine ou par une charge R non linéaire connectée à l'alternateur 1 et
- dans le cas où le stockage est constitué d'un super-condensateur, la gestion de la tension 9 aux bornes de cet élément.

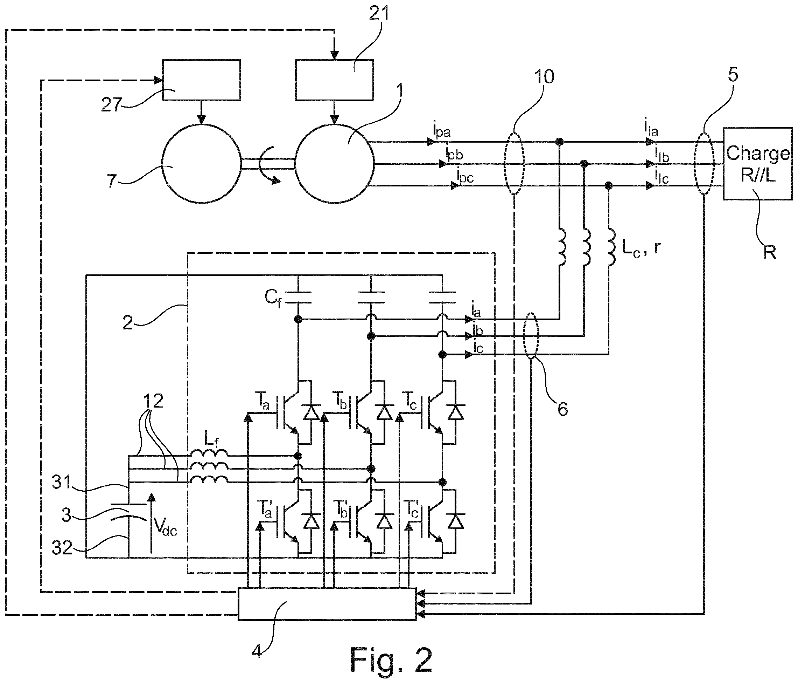

La figure 2 illustre un système comportant un convertisseur 2 de type « triple boost ».

Le convertisseur 2 comporte trois bras 12 chacun comportant une inductance Lf reliée par une première borne à la borne positive 31 de l'élément de stockage 3, un premier interrupteur électronique Tₐ, T_{b} ou T_{c} relié entre une deuxième borne de l'inductance L_{f} et une phase a, b ou c correspondante du bus AC du convertisseur, un deuxième interrupteur électronique Tₐ', T_{b}' ou T_{c}' relié entre la deuxième borne de l'inductance L_{f} et la borne négative 32 de l'élément de stockage 3 et un condensateur d'équilibrage et de filtrage C_{f} disposé entre la phase correspondante du bus AC du convertisseur et la borne négative 32 de l'élément de stockage 3.

Les courants iₐ, i_{b}, et i_{c} du bus AC 6 du convertisseur 2 sont injectés sur le bus de sortie 10 de l'alternateur 1, ce dernier délivrant un courant triphasé iₚₐ, i_{pb}, et i_{pc} pour les phases respectives a, b et c.

Le courant triphasé de sortie du système iₗₐ, i_{lb} et i_{lc} peut également être mesuré, par exemple par des capteurs 5.

Le contrôleur 4 assure la commande du convertisseur 2, peut aussi être configuré pour agir sur le régulateur de vitesse du moteur thermique 7 et/ou sur le régulateur de tension de l'alternateur 1.

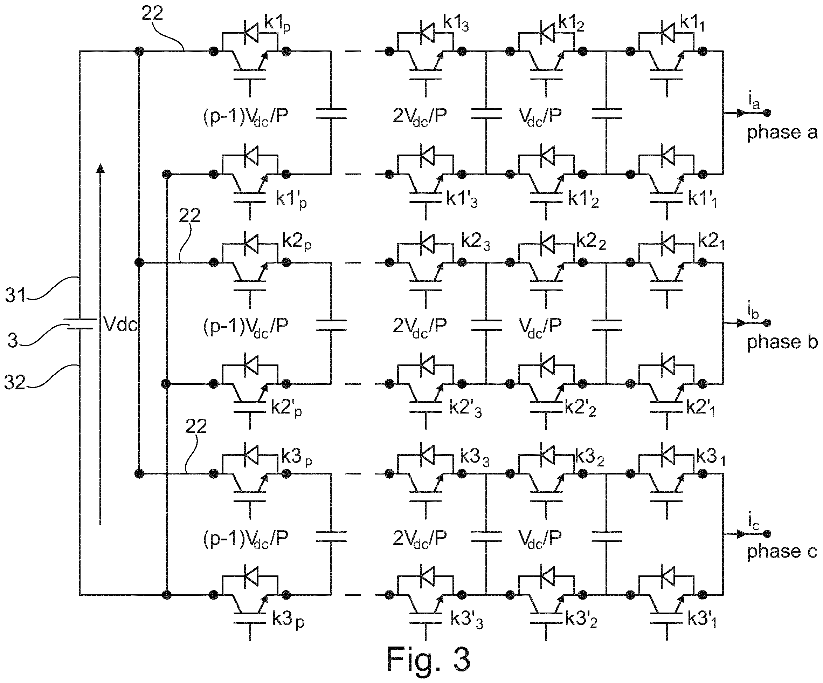

La figure 3 illustre une variante de convertisseur à p cellules, p étant un entier supérieur à 2.

Le convertisseur comporte trois bras 22 comportant chacun un premier groupe de p interrupteurs K1₁, K1₂...K1ₚ électriquement connectés en série entre une borne positive 31 de l'élément de stockage 3 et une phase du bus AC du convertisseur, et un deuxième groupe de p interrupteurs électroniques K1₁', K1₂'... K1ₚ' connectés en série entre la même phase du bus AC du convertisseur et la borne négative 32 de l'élément de stockage 3.

Chaque bras 22 peut comporter p-1 condensateurs d'équilibrage C_{f}, 2p IGBT, chaque condensateur d'équilibrage C_{f} étant connecté par une borne entre les n^{ième} et n+1^{ième} interrupteurs électroniques du premier groupe comptés depuis la phase respective du bus AC et par l'autre borne entre les n^{ième} et n+1^{ième} interrupteurs électroniques du deuxième groupe, comptés depuis la même phase du bus AC.

Le condensateur d'équilibrage C_{f} connecté entre les n^{ième} et n+1^{ième} interrupteurs électroniques du premier groupe comptés depuis la phase respective du bus AC et par l'autre borne entre les n^{ième} et n+1^{ième} interrupteurs électroniques du deuxième groupe a une tension de nV_{dc}/p, où V_{dc} représente la tension aux bornes de l'élément de stockage 3.

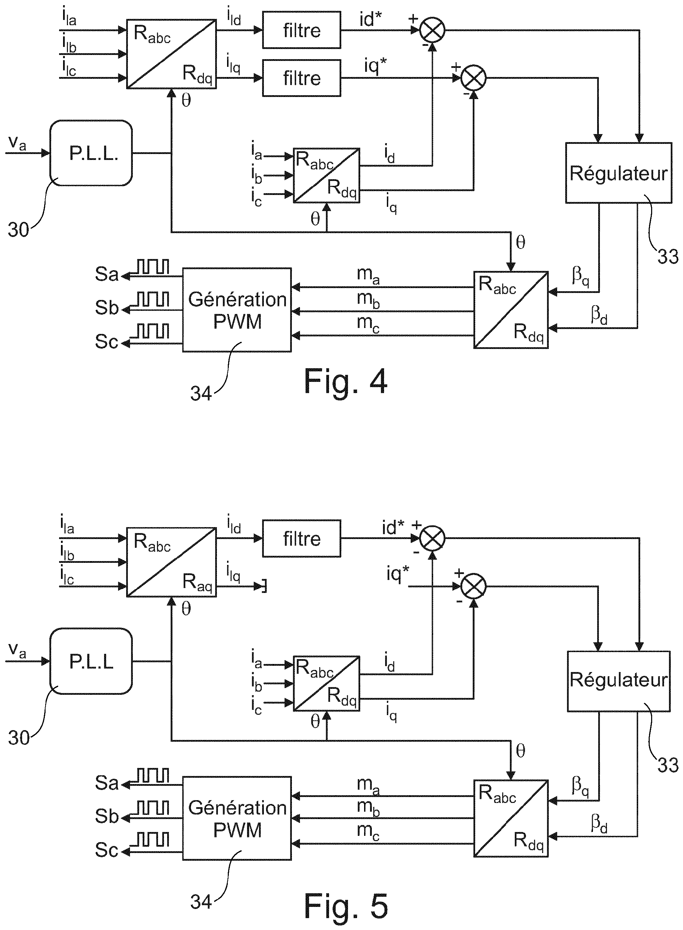

La commande de base des échanges de puissances active et réactive est présentée sur la figure 4.

Pour un réseau triphasé à amplitude fixe, le contrôle des puissances revient au contrôle des courants actif et réactif. Ces courants peuvent être contrôlés dans un repère de Park R_{dq} synchrone avec la tension simple *vₐ* de la première phase du réseau triphasé, mais l'utilisation de l'une quelconque des autres phases rentre dans le cadre de l'invention. Une boucle à verrouillage de phase 30 peut être utilisée pour la synchronisation.

La structure de commande peut être agencée pour générer des courants actif i_{d}* et réactif i_{q}* de référence dans le référentiel de Park R_{dq}, et ensuite les asservir aux composantes actives et réactives i_{d} et i_{q}, obtenues par transformation de Park dans le même référentiel R_{dq}, des courants iₐ, i_{b}, i_{c} réellement échangés par le convertisseur 2 avec le réseau, en calculant les trois rapports cycliques du convertisseur réversible 2.

La génération des courants de référence i_{d}* et i_{q}* peut être élaborée à partir des composants actif i_{ld} et réactif i_{lq} des courants de sortie de la ou des charge R dans le repère de Park R_{dq}. La composante active i_{ld} est filtrée pour éliminer les hautes fréquences et la composante continue du courant actif afin d'éviter que le convertisseur réversible 2 n'échange de l'énergie active ou réactive en régime permanent. Ainsi, le courant actif i_{d}* ne tient compte que du régime transitoire de la charge (impact ou du délestage) et ainsi permet de solliciter le système de stockage 3 uniquement en régime transitoire. La composante réactive i_{q}* peut être traitée de la même manière que la composante active i_{d}*, afin de minimiser le temps de sollicitation du convertisseur réversible 2.

Dans une variante, la puissance réactive est compensée en modifiant la structure du filtre de la figure 4 qui génère i_{q}*, ce qui permet de compenser intégralement la puissance réactive échangée avec la charge et d'obtenir un courant réactif i_{qp} dans l'alternateur nul. Le cas échéant, la compensation peut être arbitraire, l'utilisateur ayant la possibilité de définir le niveau de courant réactif qu'il souhaite compenser, comme illustré sur la figure 5.

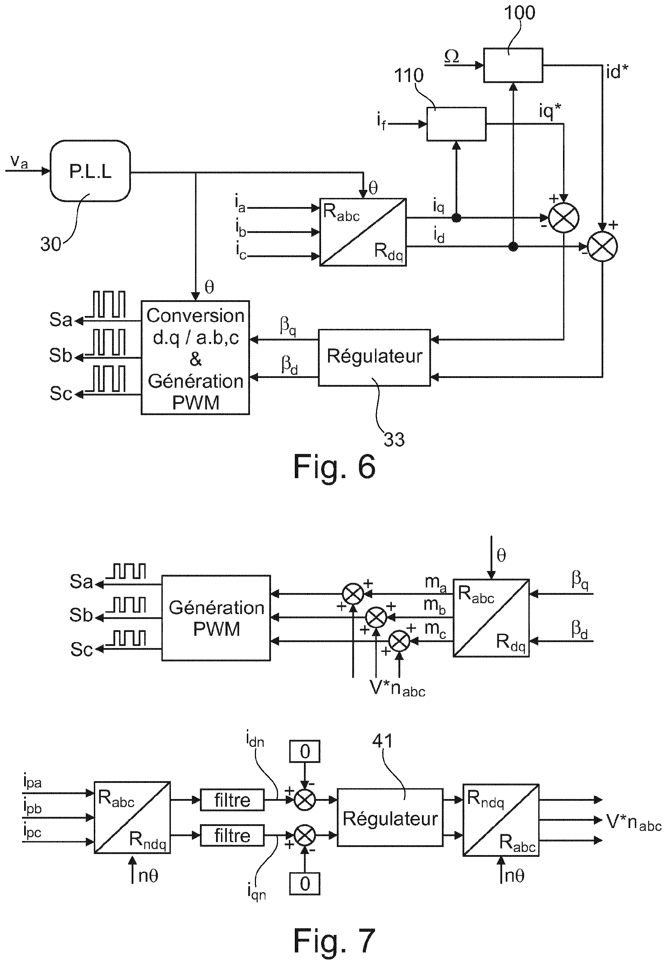

Une autre variante de génération des courants de référence i_{d}* et i_{q}* consiste à utiliser d'autres grandeurs mesurées. Des courants actif et réactif de référence (i_{d}*, i_{q}*) n'est plus directement mesurés mais calculés respectivement en fonction au moins de la vitesse (Ω) du système d'entraînement et du courant d'excitation (i_{f}) d'une excitatrice d'alternateur. Cela permet de s'affranchir de la mesurer des courants de sortie du système iₗₐ, i_{lb}, et i_{lc}. On peut prendre l'information de la variation du couple par la mesure de la variation de vitesse Ω et l'information de la variation de l'état magnétique de la machine par la mesure du courant i_{f} d'excitation de l'excitatrice, comme illustré sur la figure 6.

À partir de la mesure de la vitesse du groupe tournant et d'un modèle mathématique 100 du système, il est possible de calculer une variation du couple sur l'alternateur et d'en déduire la variation du courant actif dans l'alternateur i_{dp}. Le courant réactif dans l'alternateur i_{qp} peut être calculé à partir de la mesure du courant d'excitation de l'excitatrice et du modèle mathématique 110 du système. Ces calculs peuvent aussi être retrouvés dans la publication de P. Wetzer. « Machines synchrones - excitation. Techniques de l'ingénieur, D3545, 1997 » citée plus haut. Ainsi, on peut déduire les deux références i_{d}* et i_{q}*, à partir des courants de l'alternateur calculés (i_{dp} et i_{qp}) et les courants (i_{d} et i_{q}) du convertisseur (2) et ensuite la fonction de régulation est identique à la commande de base. Une combinaison de ces deux variantes reste dans le cadre de la présente invention.

Pour élaborer les signaux de commande *Sₐ, S_{b}* et *S_{c}* de convertisseur 2, les courants de référence i_{d}* et i_{q}* sont comparés aux composantes actives et réactive i_{d} et i_{q} du courant triphasé iₐ, i_{b}, i_{c} mesurées à la sortie du convertisseur réversible 2, obtenues après une transformation dans le repère de Park R_{dq}. L'erreur en courant est traitée par un régulateur 33, de type PID par exemple, qui génère des références de tension *β_{d}* et *β_{q}* dans le repère de Park, lesquelles, après transformation inverse de Park dans le repère triphasé R_{abc}, donnent les tensions de commande des transferts de puissance *mₐ, m_{b}* et *m_{c}* dans ce dernier repère. Enfin, une fonction de modulation de largeur d'impulsion (PWM) 34 permet d'élaborer les signaux *Sₐ, S_{b}* et *S_{c}* pour commander le convertisseur réversible 2.

Le système est avantageusement agencé pour agir sur les courants harmoniques délivrés par la machine ou induits par une charge non linéaire, grâce à la fonction filtrage actif possible avec la structure décrite dans la présente demande.

Un exemple de la commande pour la fonction filtrage actif est décrit sur la figure 7. Le convertisseur comporte au moins une fonction filtre actif permettant au convertisseur de générer des tensions de compensation pour éviter les courants harmoniques dans le convertisseur dus aux harmoniques de tension côté AC. Des tensions de commande (*V*n_{abc})* sont rajoutées aux tensions de commande dues aux transferts de puissance (mₐ, m_{b}, m_{c}) pour l'obtention des signaux de commande (Sₐ, S_{b}, S_{c}) du convertisseur.

Les courants iₚₐ, i_{pb}, i_{pc} mesurés en sortie de l'alternateur sont transformés dans un repère de Park R_{ndq} de fréquence n fois supérieure à la fréquence fondamentale du courant triphasé iₐ, i_{b}, i_{c} du bus AC du convertisseur, les courants transformés étant combinés respectivement à un filtrage pour extraire l'amplitude de l'harmonique n dans les deux axes dₙ et qₙ de ce repère de Park R_{ndq}. Ces courants extraits i_{dn} et i_{qn} sont alors asservis à des références nulles de sorte à agir sur les tensions de sortie du régulateur et envoyés à l'entrée d'un régulateur 41, par exemple de type PID ou autre structure avancée de régulateur, dont les sorties sont additionnées au fonctionnement précédent du convertisseur 2 correspondent aux tensions que doit délivrer le convertisseur 2 dans ce repère de Park R_{ndq}. Une transformation de Park inverse, à la vitesse et dans le sens de l'harmonique n, permet d'obtenir les tensions *V*n_{abc}* de commande de compensation de l'harmonique n dans le repère triphasé R_{abc}. Celles-ci peuvent être ajoutées aux tensions *mₐ, m_{b}* et *m_{c}* délivrées par la commande précédente, qui permet d'agir sur les transferts de puissance active et réactive.

Une variante consiste à considérer les courants du convertisseur en lieu et place des courants de l'alternateur, c'est-à-dire *iₐ, i_{b}*, i_{c} au lieu d*'iₚₐ*, i_{pb}, *i_{pc},* illustré sur la figure 7. Cela permet au convertisseur de produire des courants purement sinusoïdaux à la fréquence fondamentale et d'éviter que les tensions harmoniques du réseau triphasé créées par l'alternateur ne produisent des courants harmoniques dans le convertisseur. Cette dernière commande est équivalente à un circuit bouchon pour les harmoniques de tension issus de la génératrice principale avec sa charge.

Ce principe de filtrage actif peut être appliqué à tous les courants harmoniques que l'on souhaite compenser, en reproduisant la structure de compensation et en ajoutant toutes les tensions résultantes pour obtenir les tensions de commande du convertisseur.

Quelle que soit la structure du convertisseur et les lois de commande appliquées, il est souhaitable de contrôler l'état de charge du super-condensateur, donné par sa tension *V_{DC}.* Comme c'est un courant actif dans le repère de Park qui peut modifier cet état de charge, il suffit de modifier le courant de référence actif i_{d}* en retranchant un courant permettant d'agir sur la tension V_{DC}. Il faut prévoir un arrêt de sécurité de façon à éviter un dépassement de la tension maximale pour le super-condensateur tout en maintenant la tension minimale permettant d'assurer le bon fonctionnement du convertisseur 2.

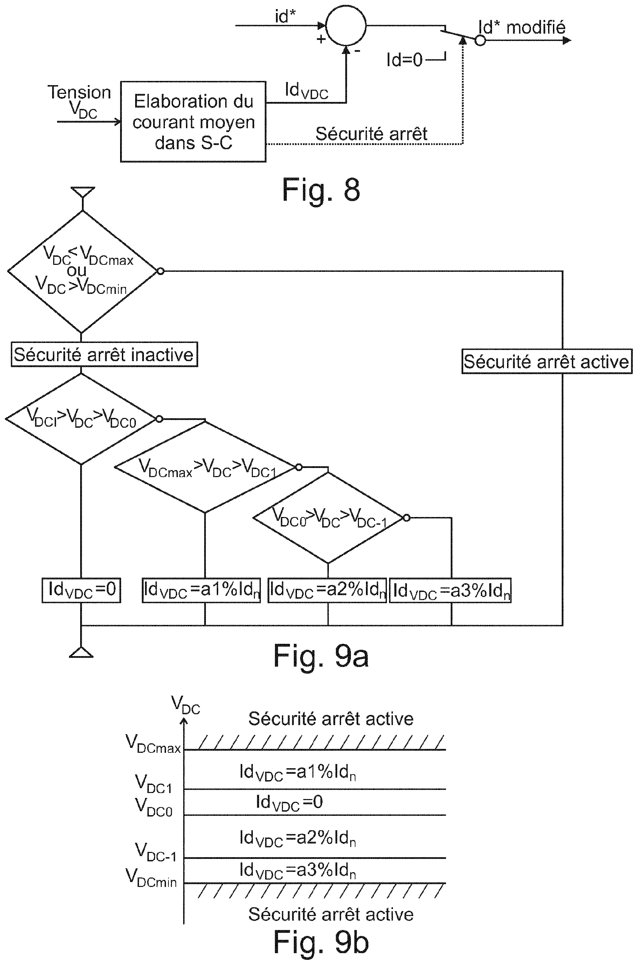

Les figures 8, 9a et 9b illustrent un exemple de ce contrôle de la tension *V_{DC}* du super-condensateur.

Les seuils *a1*%, *a2%* et *a3%* représentant des niveaux de courant de sortie du système ou de décharge par rapport au courant nominal direct *Idn* de l'alternateur, ces seuils pouvant être réglés dans la plage ±100% sans sortir du cadre de l'invention

Les valeurs *a1, a2* et *a3* sont déterminées expérimentalement pour éviter d'activer la sécurité et ne pas trop perturber le fonctionnement de la fonction hybride.

Un exemple de contrôle du courant moyen du super-condensateur consiste à délivrer une amplitude et un signe de *Id_{VDC}* dépendant de la tension V_{DC} selon des seuils programmés et d'appliquer un algorithme de comparaison en ajoutant un hystérésis au niveau des seuils pour éviter un effet de battement. Une sortie de sécurité donne un niveau logique vrai ou faux pour autoriser un courant dans le super-condensateur ou l'interdire si les seuils sont atteints ; lorsque la sécurité est active alors *Id* = *0.* Les seuils de tension ainsi que les niveaux de courant de sortie du système et de décharge peuvent être modifiés sans sortir du cadre de cette invention.

## Revendications

1. Système de génération d'énergie électrique comportant :
- un alternateur (1) accouplé à un système d'entrainement (7), délivrant une tension alternative à un bus de sortie (10),
- un convertisseur réversible AC/DC (2) dont le bus AC (6) est relié au bus de sortie (10) de l'alternateur (1),
- un élément de stockage électrique (3) relié au bus DC (9) du convertisseur (2),
- un contrôleur (4) agencé pour réagir à un régime transitoire de délestage ou d'impact de charge en commandant le convertisseur (2) de façon à prélever de l'énergie sur le bus de sortie (10) de l'alternateur (2) et à la stocker dans l'élément de stockage (3) en cas de délestage, et à prélever de l'énergie dans l'élément de stockage (3) et à l'injecter sur le bus de sortie (10) en cas d'impact de charge,
le convertisseur (2) étant commandé pour injecter des courants de compensation des courants harmoniques sur le bus AC (10) de l'alternateur (1), l'élément de stockage (3) étant de préférence un super-condensateur, le contrôleur (4) étant agencé pour réagir à un régime transitoire de puissance réactive et/ou active sur micro-réseau, lors d'un délestage ou d'un impact de charge, pour permettre le contrôle de(s) déséquilibre(s) en forme, en amplitude et en temps de réponse grâce à la commande du convertisseur gérant l'énergie sur le bus de sortie de l'alternateur, le contrôleur (4) permettant le contrôle dynamique du couple moteur du système d'entraînement à partir de l'élément de stockage (3) lors des impacts et délestages de charges.

2. Système selon la revendication 1, l'élément de stockage (3) n'étant sollicité en décharge qu'en régime transitoire, de préférence l'élément de stockage (3) n'étant sollicité qu'en régime transitoire de puissance active et/ou réactive.

3. Système selon l'une quelconque des revendications précédentes, comportant un filtre passif (8), le filtre passif (8) comportant une inductance connectée en série entre chaque phase du bus de sortie (10) de l'alternateur (1) et une phase correspondante du bus AC (6) du convertisseur (2).

4. Système selon l'une quelconque des revendications précédentes, le convertisseur (2) comportant trois bras (22) comportant chacun un premier groupe de (p) interrupteurs (K1₁; K1₂; K1₃...K1ₚ, K2₁; K2₂; K2₃...K2ₚ, K3₁; K3₂, K3₃...K3ₚ) électriquement connectés en série entre une borne (31) de l'élément de stockage (3) et une phase du bus AC (6) du convertisseur (2), et un deuxième groupe de p interrupteurs (K1₁' ; K1₂' ; K1₃'...K1ₚ', K2₁'; K2₂'; K2₃' ...K2ₚ', K3₁'; K3₂', K3₃' ...K3ₚ') électriquement connectés en série entre la même phase du bus AC (6) du convertisseur (2) et l'autre borne (32) de l'élément de stockage (3), p étant un entier supérieur à 2, de préférence, chaque bras (22) comportant p-1 condensateurs d'équilibrage (C_{f}) et chaque condensateur d'équilibrage étant (C_{f}) connecté sur un premier pôle entre les n^{ième} et n+1^{ième} interrupteurs du premier groupe, comptés depuis la phase respective du bus AC (6) et sur un second pôle entre les n^{ième} et n+1^{ième} interrupteurs du deuxième groupe comptés depuis la même phase du bus AC (6).

5. Système selon l'une quelconque des revendications 1 à 3, le convertisseur (2) comportant trois bras (12) comportant chacun une inductance (L_{f}) reliée par une première borne à une première borne (31) de l'élément de stockage (3), un premier interrupteur électronique (Tₐ, T_{b}, T_{c}) relié à une deuxième borne de l'inductance (L_{f}) et à une phase correspondante du bus AC du convertisseur, un deuxième interrupteur électronique (Tₐ', T_{b}', T_{c}') relié à la deuxième borne de l'inductance (L_{f}) et à une deuxième borne (32) de l'élément de stockage (3), et un condensateur d'équilibrage C_{f} disposé entre la phase correspondante du bus AC du convertisseur et la deuxième borne (32) de l'élément de stockage (3).

6. Système selon l'une quelconque des revendications précédentes, dans lequel des signaux de commande (Sₐ, S_{b}, S_{c}) du convertisseur 2 sont générés lors de la mise en œuvre d'un procédé de pilotage du convertisseur 2 comportant les étapes suivantes:
- calcul de composantes active et réactive (i_{d}, i_{q}) du courant triphasé (iₐ, i_{b}, i_{c}) du bus AC (6) du convertisseur (2), de préférence dans un repère de Park (R_{dq}) de même fréquence,
- calcul de courants actif et réactif de référence (i_{d}*, i_{q}*) dans le même repère de Park (R_{dq}),
- calcul de tensions de référence (β_{q}, β_{d}), à partir des différences entre les courants actif et réactif de référence (i_{d}*, i_{q}*) et des composantes active et réactive (i_{d}, i_{q}) du courant du bus AC du convertisseur (iₐ, i_{b}, i_{c}),
- calcul de tensions de commande des transferts de puissance (mₐ, m_{b}, m_{c}) du convertisseur à partir des tensions de références (β_{q}, β_{d}), de préférence par transformation inverse de Park dans le référence triphasé (R_{abc}) du courant du bus AC du convertisseur (iₐ, i_{b}, i_{c}).

7. Système selon la revendication 6, des courants actif et réactif de référence (i_{d}*, i_{q}*) étant obtenus à partir des composantes active et réactive (i_{ld}, i_{lq}) du courant de sortie du système (iₗₐ, i_{lb}, i_{lc}), dans le même repère de Park.

8. Système selon la revendication 7, chacune des composantes active et réactive (i_{ld}, i_{lq}) du courant de sortie du système (iₗₐ, i_{lb}, i_{lc}) étant filtrée par un filtre pour y éliminer les hautes fréquences et la composante continue afin d'éviter que le convertisseur (2) échange de l'énergie en régime permanent.

9. Système selon la revendication 7, la composante active (i_{ld}) du courant de sortie du système (iₗₐ, i_{lb}, i_{lc}) étant filtrée par un filtre pour y éliminer les hautes fréquences et la composante continue afin d'éviter que le convertisseur échange de l'énergie en régime permanent, la composante réactive (i_{lq}) du courant de sortie du système (iₗₐ, i_{lb}, i_{lc}) étant filtrée de manière à obtenir un courant réactif (i_{qp}) nul sur l'alternateur.

10. Système selon l'une quelconque des revendications 1 à 6, des courants actif et réactif de référence (i_{d}*, i_{q}*) étant calculés respectivement en fonction au moins de la vitesse (Ω) du système d'entraînement et du courant d'excitation (i_{f}) d'une excitatrice d'alternateur.

11. Système selon l'une quelconque des revendications précédentes, le convertisseur comportant au moins une fonction filtre actif pour générer des tensions de commande de compensation des courants harmoniques (V**n_{abc}*)*,* ces dernières étant rajoutées aux tensions de commande de transferts de puissance (mₐ, m_{b}, m_{c}) pour l'obtention des signaux de commande (Sₐ, S_{b}, S_{c}) du convertisseur.

12. Système selon la revendication 11, les tensions de commande de compensation des courants harmoniques (V**n_{abc}*) étant obtenues au moins par calcul des composantes active et réactive (i_{dn}, i_{qn}) des courants de sortie de l'alternateur (iₚₐ, i_{pb}, i_{pc}), de préférence dans un repère de Park (R_{ndq}) de fréquence n fois supérieure à la fréquence du repère triphasé (R_{abc}), n étant un entier supérieur à 2.

13. Système selon la revendication 11, les tensions de commande de compensation des courants harmoniques (V**n_{abc}*) étant obtenues au moins par calcul des composantes active et réactive des courants du bus AC du convertisseur (iₐ, i_{b}, i_{c}), de préférence dans un repère de Park de fréquence n fois supérieure à la fréquence du repère triphasé (R_{abc}), n étant un entier supérieur à 2.

14. Système selon l'une quelconque des revendications 8 à 13, la valeur du courant de référence active i_{d}* étant retranchée d'un courant de contrôle du super-condensateur (ID_{VDC}) avant d'être utilisée pour le calcul des tensions de références (β_{q}, β_{d}) afin d'éviter un dépassement de seuils de tension de sécurité prédéfini, ce courant de contrôle (ID_{VDC}) étant fonction au moins de la tension aux bornes de l'élément de stockage et du courant nominal direct (I_{dn}) de l'alternateur.

## Patentansprüche

1. System zur Erzeugung von elektrischer Energie, umfassend:
- einen Generator (1), der mit einem Antriebssystem (7) gekoppelt ist und eine Wechselspannung an einen Ausgangsbus (10) abgibt,
- einen umkehrbaren AC/DC-Umrichter (2), dessen AC-Bus (6) mit dem Ausgangsbus (10) des Generators (1) verbunden ist,
- ein Stromspeicherelement (3), das mit dem DC-Bus (9) des Umrichters (2) verbunden ist,
- einen Controller (4), der dazu eingerichtet ist, auf einen transienten Zustand des Lastabwurfs oder Laststoßes zu reagieren, indem er den Umrichter (2) so steuert, dass im Fall eines Lastabwurfs Energie am Ausgangsbus (10) des Generators (2) entnommen wird und im Speicherelement (3) gespeichert wird und im Fall eines Laststoßes Energie aus dem Speicherelement (3) entnommen wird und in den Ausgangsbus (10) eingespeist wird,
wobei der Umrichter (2) so gesteuert wird, dass er Ströme zur Kompensation der Oberwellenströme in den AC-Bus (10) des Generators (1) einspeist, wobei das Speicherelement (3) bevorzugt ein Superkondensator ist, wobei der Controller (4) dazu eingerichtet ist, auf einen transienten Zustand der Blind- und/oder Wirkleistung im Mikronetz bei einem Lastabwurf oder einem Laststoß zu reagieren, um die Regelung von Unsymmetrie(n) hinsichtlich Form, Amplitude und Reaktionszeit dank der Steuerung des Umrichters zu ermöglichen, der die Energie am Ausgangsbus des Generators verwaltet, wobei der Controller (4) die dynamische Regelung des Motordrehmoments des Antriebssystems ausgehend vom Speicherelement (3) bei Laststößen und -abwürfen ermöglicht.

2. System nach Anspruch 1, wobei das Speicherelement (3) nur im transienten Zustand auf Entladung beansprucht wird, wobei das Speicherelement (3) bevorzugt nur im transienten Zustand der Wirk- und/oder Blindleistung beansprucht wird.

3. System nach einem der vorhergehenden Ansprüche, umfassend einen passiven Filter (8), wobei der passive Filter (8) eine Induktivität umfasst, die in Reihe zwischen jede Phase des Ausgangsbusses (10) des Generators (1) und eine entsprechende Phase des AC-Busses (6) des Umrichters (2) geschaltet ist.

4. System nach einem der vorhergehenden Ansprüche, wobei der Umrichter (2) drei Arme (22) umfasst, umfassend jeweils eine erste Gruppe von p Schaltern (K1₁; K1₂; K1₃ ... K1ₚ, K2₁; K2₂; K2₃ ... K2ₚ, K3₁; K3₂, K3₃ ... K3ₚ), die elektrisch in Reihe zwischen eine Klemme (31) des Speicherelements (3) und eine Phase des AC-Busses (6) des Umrichters (2) geschaltet sind, und eine zweite Gruppe von p Schaltern (K1₁'; K1₂'; K1₃' ... K1ₚ', K2₁'; K2₂'; K2₃' ... K2ₚ', K3₁'; K3₂', K3₃' ... K3ₚ'), die elektrisch in Reihe zwischen dieselbe Phase des AC-Busses (6) des Umrichters (2) und die andere Klemme (32) des Speicherelements (3) geschaltet sind, wobei p eine ganze Zahl größer als 2 ist, wobei bevorzugt jeder Arm (22) p-1 Symmetrierkondensatoren (C_{f}) umfasst und jeder Symmetrierkondensator (C_{f}) an einem ersten Pol zwischen die n-ten und n+l-ten Schalter der ersten Gruppe, gezählt von der jeweiligen Phase des AC-Busses (6) aus, und an einem zweiten Pol zwischen die n-ten und n+l-ten Schalter der zweiten Gruppe, gezählt von derselben Phase des AC-Busses (6) aus, geschaltet ist.

5. System nach einem der Ansprüche 1 bis 3, wobei der Umrichter (2) drei Arme (12) umfasst, umfassend jeweils eine Induktivität (L_{f}), die über eine erste Klemme mit einer ersten Klemme (31) des Speicherelements (3) verbunden ist, einen ersten elektronischen Schalter (Tₐ, T_{b}, T_{c}), der mit einer zweiten Klemme der Induktivität (L_{f}) und mit einer entsprechenden Phase des AC-Busses des Umrichters verbunden ist, einen zweiten elektronischen Schalter (Tₐ', T_{b}', T_{c}'), der mit der zweiten Klemme der Induktivität (L_{f}) und mit einer zweiten Klemme (32) des Speicherelements (3) verbunden ist, und einen Symmetrierkondensator (C_{f}), der zwischen der entsprechenden Phase des AC-Busses des Umrichters und der zweiten Klemme (32) des Speicherelements (3) angeordnet ist.

6. System nach einem der vorhergehenden Ansprüche, bei dem Steuerungssignale (Sₐ, S_{b}, S_{c}) des Umrichters (2) bei der Ausführung eines Verfahrens zur Ansteuerung des Umrichters (2) erzeugt werden, das die folgenden Schritte umfasst:
- Berechnen von Wirk- und Blindkomponenten (i_{d}, i_{q}) des Dreiphasenstroms (iₐ, i_{b}, i_{c}) des AC-Busses (6) des Umrichters (2), bevorzugt in einem Park-Koordinatensystem (R_{dq}) mit gleicher Frequenz,
- Berechnen von Referenz-Wirk- und -Blindströmen (i_{d}*, i_{q}*) in dem gleichen Park-Koordinatensystem (R_{dq}),
- Berechnen von Referenzspannungen (β_{q}, β_{d}) ausgehend von den Differenzen zwischen den Referenz-Wirk- und Blindströmen (i_{d}*, i_{q}*) und von den Wirk- und Blindkomponenten (i_{d}, i_{q}) des Stroms des AC-Busses des Umrichters (iₐ, i_{b}, i_{c}),
- Berechnen von Steuerspannungen für die Leistungstransfers (mₐ, m_{b}, m_{c}) des Umrichters ausgehend von den Referenzspannungen (β_{q}, β_{d}), bevorzugt durch inverse Park-Transformation im dreiphasigen Referenzsystem (R_{abc}) des Stroms des AC-Busses des Umrichters (iₐ, i_{b}, i_{c}).

7. System nach Anspruch 6, wobei die Referenz-Wirk- und -Blindströme (i_{d}*, i_{q}*) ausgehend von den Wirk- und Blindkomponenten (i_{ld}, i_{lq}) des Ausgangsstroms des Systems (iₗₐ, i_{lb}, i_{lc}) in dem gleichen Park-Koordinatensystem erhalten werden.

8. System nach Anspruch 7, wobei jede der Wirk- und Blindkomponenten (i_{ld}, i_{lq}) des Ausgangsstroms des Systems (iₗₐ/ i_{lb}, i_{lc}) mit einem Filter gefiltert wird, um daraus die hohen Frequenzen und die Gleichstromkomponente zu beseitigen, um zu verhindern, dass der Umrichter (2) im stationären Zustand Energie austauscht.

9. System nach Anspruch 7, wobei die Wirkkomponente (i_{ld}) des Ausgangsstroms des Systems (iₗₐ, i_{lb}, i_{lc}) mit einem Filter gefiltert wird, um daraus die hohen Frequenzen und die Gleichstromkomponente zu beseitigen, um zu verhindern, dass der Umrichter im stationären Zustand Energie austauscht, wobei die Blindkomponente (i_{lq}) des Ausgangsstroms des Systems (iₗₐ, i_{lb}, i_{lc}) derart gefiltert wird, dass ein Blindstrom (i_{qp}) von null am Generator erhalten wird.

10. System nach einem der Ansprüche 1 bis 6, wobei Referenz-Wirk- und -Blindströme (i_{d}*, i_{q}*) jeweils in Abhängigkeit mindestens von der Geschwindigkeit (Ω) des Antriebssystems und vom Erregerstrom (i_{f}) einer Generatorerregermaschine berechnet werden.

11. System nach einem der vorhergehenden Ansprüche, wobei der Umrichter mindestens eine Aktivfilterfunktion umfasst, um Steuerspannungen zur Kompensation der Oberwellenströme (V**n_{abc}*) zu erzeugen, wobei diese den Leistungstransfer-Steuerspannungen (mₐ, m_{b}, m_{c}) hinzugefügt werden zum Erhalten der Steuerungssignale (Sₐ, S_{b}, S_{c}) des Umrichters.

12. System nach Anspruch 11, wobei die Steuerspannungen zur Kompensation der Oberwellenströme (V**n_{abc}*) mindestens durch Berechnen der Wirk- und Blindkomponenten (i_{dn}, i_{qn}) der Ausgangsströme des Generators (iₚₐ, i_{pb}, i_{pc}) erhalten werden, bevorzugt in einem Park-Koordinatensystem (R_{ndq}) mit einer Frequenz, die n Mal höher als die Frequenz des dreiphasigen Koordinatensystems (R_{abc}) ist, wobei n eine ganze Zahl größer als 2 ist.

13. System nach Anspruch 11, wobei die Steuerspannungen zur Kompensation der Oberwellenströme (V**n_{abc}*) mindestens durch Berechnen der Wirk- und Blindkomponenten der Ströme des AC-Busses des Umrichters (iₐ, i_{b}, i_{c}) erhalten werden, bevorzugt in einem Park-Koordinatensystem mit einer Frequenz, die n Mal höher als die Frequenz des dreiphasigen Koordinatensystems (R_{abc}) ist, wobei n eine ganze Zahl größer als 2 ist.

14. System nach einem der Ansprüche 8 bis 13, wobei der Wert des Wirkreferenzstroms i_{d}* von einem Regelungsstrom des Superkondensators (ID_{VDC}) abgezogen wird, bevor er zur Berechnung der Referenzspannungen (β_{q}, β_{d}) verwendet wird, um eine Überschreitung von vorgegebenen Sicherheitsspannungsschwellenwerten zu verhindern, wobei dieser Regelungsstrom (ID_{VDC}) mindestens von der Spannung an den Klemmen des Speicherelements und vom Nenndurchlassstrom (I_{dn}) des Generators abhängig ist.

## Claims

1. An electrical energy generation system comprising:
- an alternator (1) coupled to a driving system (7), delivering an alternating voltage to an output bus (10),
- an AC/DC reversible converter (2) whose AC bus (6) is linked to the output bus (10) of the alternator (1),
- an electrical storage element (3) linked to the DC bus (9) of the converter (2),
- a controller (4) arranged to react to transient load-shedding or charging impact conditions by controlling the converter (2) in such a way as to take energy from the output bus (10) of the alternator (2) and store it in the storage element (3) in load-shedding cases, and to take energy from the storage element (3) and inject it onto the output bus (10) in charging impact cases,
the converter (2) being controlled to inject harmonic current neutralization currents on the AC bus (10) of the alternator (1), the storage element (3) being preferably a supercapacitor, the controller (4) being arranged to react to transient reactive and/or active power conditions on a micronetwork, upon load-shedding or charging impact, to allow the control of the imbalance(s) in form, in amplitude and in response time by virtue of the control of the converter managing the energy on the output bus of the alternator, the controller (4) allowing the dynamic control of the motor torque of the driving system from the storage element (3) in charging impact and load-shedding cases.

2. The system as claimed in claim 1, the storage element (3) being invoked to discharge only in transient conditions, preferably the storage element (3) being invoked only in transient active and/or reactive power conditions.

3. The system as claimed in any one of the preceding claims, comprising a passive filter (8), the passive filter (8) comprising an inductance connected in series between each phase of the output bus (10) of the alternator (1) and a corresponding phase of the AC bus (6) of the converter (2).

4. The system as claimed in any one of the preceding claims, the converter (2) comprising three arms (22) each comprising a first group of (p) switches (K1₁; K1₂; Kl₃...Klₚ, K2₁; K2₂; K2₃...K2ₚ, K3₁; K3₂, K3₃...K3ₚ) electrically connected in series between a terminal (31) of the storage element (3) and a phase of the AC bus (6) of the converter (2), and a second group of p switches (K1₁'; K1₂'; K1₃'...K1ₚ', K2₁'; K2₂'; K2₃'...K2ₚ', K3₁'; K3₂', K3₃'...K3ₚ') electrically connected in series between the same phase of the AC bus (6) of the converter (2) and the other terminal (32) of the storage element (3), p being an integer greater than 2, preferably, each arm (22) comprising p-1 balancing capacitors (C_{f}), each balancing capacitor being (C_{f}) connected to a first pole between the n^{th} and the n+1^{th} switches of the first group, counted from the respective phase of the AC bus (6) and to a second pole between the n^{th} and the n+1^{th} switches of the second group, counted from the same phase of the AC bus (6).

5. The system as claimed in any one of claims 1 to 3, the converter (2) comprising three arms (12) each comprising an inductance (L_{f}) linked by a first terminal to a first terminal (31) of the storage element (3), a first electronic switch (Tₐ, T_{b}, T_{c}) linked to a second terminal of the inductance (L_{f}) and to a corresponding phase of the AC bus of the converter, a second electronic switch (Tₐ', T_{b}', T_{c}') linked to the second terminal of the inductance (L_{f}) and to a second terminal (32) of the storage element (3), and a balancing capacitor (C_{f}) arranged between the corresponding phase of the AC bus of the converter and the second terminal (32) of the storage element (3).

6. The system as claimed in any one of the preceding claims, in which control signals (Sₐ, S_{b}, S_{c}) of the converter (2) are generated upon the implementation of a method for driving the converter 2 comprising the following steps:
- calculation of active and reactive components (i_{d}, i_{q}) of the three-phase current (iₐ, i_{b}, i_{c}) of the AC bus (6) of the converter (2), preferably in a Park reference frame (R_{dq}) of the same frequency,
- calculation of reference active and reactive currents (i_{d}*, i_{q}*) in the same Park reference frame (R_{dq}),
- calculation of reference voltages (β_{q}, β_{d}), from the differences between the reference active and reactive currents (i_{d}*, i_{q}*) and the active and reactive components (i_{d}, i_{q}) of the current of the AC bus of the converter (iₐ, i_{b}, i_{c}),
- calculation of control voltages for the power transfers (mₐ, m_{b}, m_{c}) of the converter from the reference voltages (β_{q}, β_{d}), preferably by inverse Park transformation in the three-phase reference (R_{abc}) of the current of the AC bus of the converter (iₐ, i_{b}, i_{c}).

7. The system as claimed in claim 6, reference active and reactive currents (i_{d}*, i_{q}*) being obtained from the active and reactive components (i_{ld}, i_{lq}) of the output current of the system (iₗₐ, i_{lb}, i_{lc}) in the same Park reference frame.

8. The system as claimed in claim 7, each of the active and reactive components (i_{ld}, i_{lq}) of the output current of the system (iₗₐ, i_{lb}, i_{lc}) being filtered by a filter to eliminate therefrom the high frequencies and the continuous component in order to avoid having the convertor (2) exchange energy in steady-state conditions.

9. The system as claimed in claim 7, the active component (iid) of the output current of the system (iₗₐ, i_{lb}, i_{lc}) being filtered by a filter to eliminate therefrom the high frequencies and the continuous component in order to avoid having the converter exchange energy in steady-state conditions, the reactive component (i_{lq}) of the output current of the system (iₗₐ, i_{lb}, i_{lc}) being filtered so as obtain a zero reactive current (i_{qp}) on the alternator.

10. The system as claimed in any one of claims 1 to 6, reference active and reactive currents (i_{d}*, i_{q}*) being calculated respectively as a function at least of the speed (Ω) of the driving system and of the excitation current (i_{f}) of an exciter of the alternator.

11. The system as claimed in any one of the preceding claims, the converter comprising at least one active filter function for generating harmonic current neutralization control voltages (*V*n_{abc}*)*,* the latter being added to the power transfer control voltages (mₐ, m_{b}, m_{c}) to obtain the control signals (Sₐ, S_{b}, S_{c}) of the converter.

12. The system as claimed in claim 11, the harmonic current neutralization control voltages (V**n_{abc}*) being obtained at least by calculation of the active and reactive components (i_{dn}, i_{qn}) of the output currents of the alternator (iₚₐ, i_{pb}, i_{pc}), preferably in a Park reference frame (R_{ndq}) of a frequency n times greater than the frequency of the three-phase reference frame (R_{abc}), n being an integer greater than 2.

13. The system as claimed in claim 11, the harmonic current neutralization control voltages (V**n_{abc}*) being obtained at least by calculation of the active and reactive components of the currents of the AC bus of the converter (iₐ, i_{b}, i_{c}), preferably in a Park reference frame of a frequency n times greater than the frequency of the three-phase reference frame (R_{abc}), n being an integer greater than 2.

14. The system as claimed in any one of claims 8 to 13, the value of the active reference current i_{d}* being subtracted from a supercapacitor control current (Id_{VDC}) before being used for the calculation of the reference voltages (β_{q}, β_{d}) in order to avoid exceeding predefined safety voltage thresholds, this control current (Id_{VDC}) being a function at least of the voltage at the terminals of the storage element and of the direct nominal current (I_{dn}) of the alternator.
